(19) Europäisches Patentamt / European Patent Office / Office européen des brevets

(11) **EP 3 048 785 A1**

(12) **EUROPEAN PATENT APPLICATION**

(43) Date of publication:
**27.07.2016 Bulletin 2016/30**

(51) Int Cl.:
*H04N 1/58* (2006.01)

(21) Application number: **15152347.9**

(22) Date of filing: **23.01.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **PACKZ Software BVBA
9820 Merelbeke (BE)**

(72) Inventors:
• **Coussement, Patrick
9830 Sint-Martens-Latem (BE)**
• **van Loo, Peter
9000 Gent (BE)**

(74) Representative: **Plas, Axel Ivo Michel
IP HILLS NV
Hubert Frère-Orbanlaan 329
9000 Gent (BE)**

(54) **Computer-implemented method for evaluating a trap in a polychromatic document image**

(57) According to a first aspect, the invention relates to a computer-implemented method for evaluating a trap (T1,T2, T3) determined at a corresponding boundary (104-106) between two bounding regions (101-103) of different color in a document image (100) to avoid or reduce the effects of misregistration in a polychromatic print process. The method comprises a step of calculating for the trap (T1 ,T2,T3) a value representing a perceptual color difference between the trap (T1,T2,T3) and a bounding region (101-103) corresponding to the trap (T1,T2,T3). Further, the method comprises a step of comparing the value with a threshold value (T) and a step of marking the trap (T1,T2,T3) as a bad trap (T1,T2) when the value exceeds the threshold value (T).

Fig. 4

**Description**

**Technical Field**

The disclosure generally relates to the field of trapping, wherein polychromatic document images are adapted in view of potential misregistration in polychromatic printing processes. In particular, the disclosure relates to a computer-implemented method for the evaluation of determined traps for polychromatic document images.

**Background**

Color printing of graphical images for press-work, posters, etc. typically is performed by a polychromatic printing process. Hereby, an electronic document page or image is reproduced by combining two, three or more prints of a basic or 'spot' color on top of each other. Combining basic color inks generates the full-color print image.

A basic color model for polychromatic or multi-color printing concerns the 'CMYK' color model. CMYK refers to the four inks cyan, magenta, yellow and black. Typically, printing occurs in that color order. Another well-known color model implements the 'CMYK' basic colors with extra special 'spot' colors, e.g. gold, silver, etc.

An electronic color image will be checked and/or adapted in view of the printing process. For example, in preflight processes, automated and manual file checking is combined to control the line of work attains the press on time and correctly. It can e.g. reduce the likelihood of rasterization problems. However an adaption for potential misregistration of different color print plates is not included.

A typical problem with multi-color or polychromatic printing is the noticeable misregistration of color prints in the graphical workflow. When printing plates are not aligned perfectly, unintentional white lines or spaces can arise between bordering color areas or regions in the image.

A solution hereto is a framing or trapping process. Herein, bounding color areas in the full-color image are identified. A trap is created for the boundary between two color areas, which trap concerns a compensation for eventual misregistration in a polychromatic print process. The compensation is determined as an overlapping and/or underlapping zone at the boundary of the two areas of different color. Hereby, the amount of white lines or spaces resulting from misregistration is reduced or even removed.

Document US 5113249 discloses a method of providing traps or so-called 'frames' based on darkness (luminance) differences for adjacent color areas. The trapping direction or the direction of overlap/underlap is determined based on the relative luminance of the colors of the two bordering regions. Hereby, the region with higher relative luminance is broadened in the direction of the other region with lower relative luminance.

Document US 5668931 discloses an automatic method of compensating for misregistration of printing plates in printing polychromatic document pages or images. Herein, a trapping map image is superimposed upon the structured graphic image representing the layout of the document page or image from which it is derived, so as to prevent light leaks and other errors at the boundaries between color regions with the image. Traps are selected automatically and applied to a boundary map comprising the set of boundaries between regions of different color of the original image. Trap specification can be carried out automatically or manually through direct user interaction. Hereby trap color, stroke width and offset can be manipulated manually.

A problem of the existing solutions is that quality of polychromatic prints depends on considerable expertise and experience by a pre-press operator. Manual specification or adaption of polychromatic document pages or images can take a long time. Even after a long processing time by an operator, such adaptation remains prone to human errors and misjudgements. Hence, bad traps remain present in the printed result, which bad traps correspond to visually disturbing color transitions.

**Summary**

In order to provide a quicker trapping process with a reduced error or misjudgement rate, an improved method is needed allowing to determine and/or remove potential visually disturbing traps.

This objective is achieved, in a first aspect, by a computer-implemented method for evaluating a trap determined at a corresponding boundary between two bounding regions of different color in a document image to avoid or reduce the effects of misregistration in a polychromatic print process, the method comprising the steps of:

- calculating for the trap a value representing a perceptual color difference between the trap and a bounding region corresponding to the trap;
- comparing the value with a threshold value; and
- marking the trap as a bad trap when the value exceeds the threshold value.

When the value representing a perceptual color difference between the trap and a bounding region corresponding to the trap exceeds the threshold, a bad trap is determined or marked. In that case a too visual color transition for a trap will be too distinct. Marking these bad traps allows for an improved handling of traps in optimizing document images. A quicker and less error prone image processing can be performed with a more qualitative focus on adapting traps, e.g. by an operator.

The term "document image" in underlying invention should be understood as a document page or document image comprising polychromatic objects. A document could concern e.g. a vector-based document, such as a PDF ("Portable Document Format") file. Polychromatic document objects comprise polygon shapes. These shapes can be isolated from each other, can abut one another at one or more points, can partially overlap one another, or can completely overlap one another. The polychromatic objects or regions can be colored by solid colors, tints, degrades, contone images, 'no fill', etc.

A document image can be reproduced by a polychromatic printing process, by means of two, three or more color prints on top of each other. Hereto, the final processed document image is divided into a number of basic color prints, e.g. by means of a so-called Raster Image Processor (RIP) of a printing system. Eventually, the color of the original polychromatic objects or regions will be reproduced by a superposition of the basic colors (cfr. inks), wherein the intensity of each basic color is situated within the range between 0% and 100%.

The term "trap" in underlying invention should be understood as a compensation for misregistration in a polychromatic print process, wherein the compensation concerns a determined overlap and/or underlap at a boundary of two regions of different color. Preferably, the trapping direction or the direction of overlap/underlap is determined based on the relative luminance and/or opacity of the colors of the two bordering regions. Hereby, e.g. a region with higher relative luminance is broadened in the direction of the other region with lower relative luminance. The combined color for the trap can be obtained by retaining per basic color the maximal intensity for the two bounding colors (cfr. bounding regions of different color).

The term "overlying trap color" in underlying invention should be understood as the color corresponding to the 'broadend region, or the regions of overlap/underlap for the trap.

The term "underlying trap color" in underlying invention should be understood as the color corresponding to the original bouding region located 'beneath' or 'underlying' the trap.

The term "trap width" in underlying invention should be understood as the width of overlap/underlap for the trap. Preferably, the trap width concerns a user-definable setting, e.g. in the range of 0.1mm-0.4mm. Possibly, a second trap width setting can be set for opaque basic colors, e.g. black or gold. For example, a first trap width setting could be 0.2mm for basic colors yellow, cyan and magenta, while the second trap width for black is set 0.4mm.

The term "perceptual color difference" in underlying invention should be understood as a magnitude of difference in color, wherein the nonlinear response of the human eye is taken into account. An example of a perceptual color difference concerns the known Delta E or $\Delta E$ color difference. Different versions or formulas exist, whether or not taking into account further compensations such as the 'perceptual uniformity issue'. Some examples include but are not limited to CIE76 $\Delta E$, CIE94 $\Delta E$, CIEDE2000 $\Delta E$ or CMC I:c (1984) $\Delta E$.

According to an embodiment, the calculated value represents a perceptual color difference between the trap and the bounding region underlying the trap.

By taking into account the nonlinear response of the human eye for color differences, visually disturbing and therefore less promising trap color transitions can be marked.

According to an embodiment, the method further comprises:

- adding the bad trap to a list of bad traps.

Adding determined bad traps to a list, allows for tracking the most visual trap transitions for the resulting image print. Keeping a list of bad traps gives a clear overview of visually disturbing traps. Hereby a quicker and more focused approach is enabled in order to improve the handling of traps, e.g. by a pre-press operator.

According to an embodiment, the method further comprises:

- enabling an operator to reduce intensity of the bad trap in the document image.

By reducing the intensity of a trap, the degree of visual color transition between bounding regions is decreased. Which improves the visual trap, but decreases the effectiveness of the trap.

According to an embodiment, reducing intensity of a bad trap corresponds to a minimal intensity reduction for one or more basic colors of the trap color such that the threshold value equals the value representing the perceptual color difference between the trap and the bounding region corresponding to the trap.

By reducing the intensity of one or more basic colors of the trap color, the degree of visual color transition between the trap and the bounding regions improves. By requiring a minimal intensity reduction, the effectiveness of the trap can be optimized.

According to an embodiment, reducing intensity of a bad trap corresponds to reducing intensity of one basic color of the trap color such that the threshold value equals the value representing the perceptual color difference between the trap and the bounding region corresponding to the trap.

According to an embodiment, the basic color is determined based on a minimal intensity reduction.

According to an embodiment, reducing intensity of a bad trap is partly determined by trap effectiveness.

An optimized trap can be determined by taking into account the impact of the trap in different print results. The effect of different pre-defined traps could be e.g. evaluated and/or rated for a number of specific misregistrations of color prints for the resulting print.

According to an embodiment, the method further comprises:

- enabling an operator to remove the bad trap from the document image.

By removing a trap from the document image, the corresponding transition(s) in color between the bounding regions can be less disturbing for a viewer. Based on his expertise, the operator can decide to remove a bad trap from e.g. a list of bad traps, allowing for a quicker adaptation and correction of the document image.

According to an embodiment, the perceptual color difference corresponds to a $\Delta E$ value.

According to an embodiment, the value is calculated by means of a $\Delta E$ formula based on CIE L*a*b* color space values for the trap and the bounding region corresponding to the trap.

According to an embodiment, the threshold value concerns a predefined threshold value.

According to an embodiment, the threshold value concerns an adjustable threshold value.

As the threshold value can be adjusted, this allows for setting e.g. the quality of printing or allowing to set a threshold for different image types. By setting the threshold value, a trade-off can be made between processing time and print quality.

According to an embodiment, the threshold value is adjustable by a user.

When a user or operator can adjust the threshold value, based on his expertise a threshold can be determined or changed depending on e.g. the image type and/or expected print quality.

According to an embodiment, the threshold value is adjustable based on a quality setting.

According to an embodiment, a prior step of the method concerns:

- determining one or more traps in a polychromatic document image.

Hence, the method of marking bad traps can be part of the general trapping process for a polychromatic document image.

According to an embodiment, determining one or more traps comprises the retrieval of one or more tagged traps within the document image.

A document, document page or document image can contain formerly determined traps. When such determined traps are saved and tagged within the corresponding document, these can be retrieved later for evaluation. This avoids duplicate trapping.

According to an embodiment, determining one or more traps comprises the determination of untagged traps within the document image.

In a second aspect, embodiments of the invention relate to a processor for carrying out the method according to the first aspect.

In a third aspect, embodiments of the invention relate to a computer program product comprising computer-executable instructions for performing the method according to the first aspect, when the program is run on a computer.

In a fourth aspect, embodiments of the invention relate to a computer readable storage medium comprising the computer program product according to the third aspect.

In a fifth aspect, embodiments of the invention relate to a data processing system programmed for carrying out the method according to the first aspect.

## Brief Description of the Drawings

Fig. 1 illustrates an exemplary multi-color document image.

Fig. 2 schematically illustrates trapping on the document image of Fig. 1 according to an embodiment of underlying invention.

Fig. 3 schematically illustrates a workflow for determining bad traps for the trapped document image of Fig. 2, according to an embodiment of underlying invention.

Fig. 4 schematically illustrates a user interface displaying a trapped document image together with a list of bad traps for the trapped document image, according to an embodiment of underlying invention.

Fig. 5 schematically illustrates the reduction of intensity for a bad trap in a document image, according to an embodiment of underlying invention.

## Detailed Description of Embodiment(s)

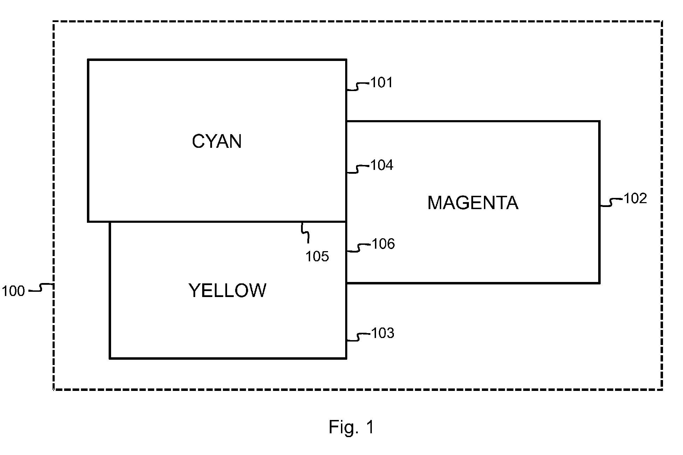

First, Fig. 1 will be described. In Fig. 1 an original document image (100) is shown. The multi-color CMYK image (100) consists of a cyan color region (101), a magenta color region (102) and a yellow color region (103). The cyan region (101) borders to the magenta region (102) along a first boundary (104) and to the yellow region (103) along a second boundary (105). The yellow region (103) and the magenta region (102) have common boundary (106).

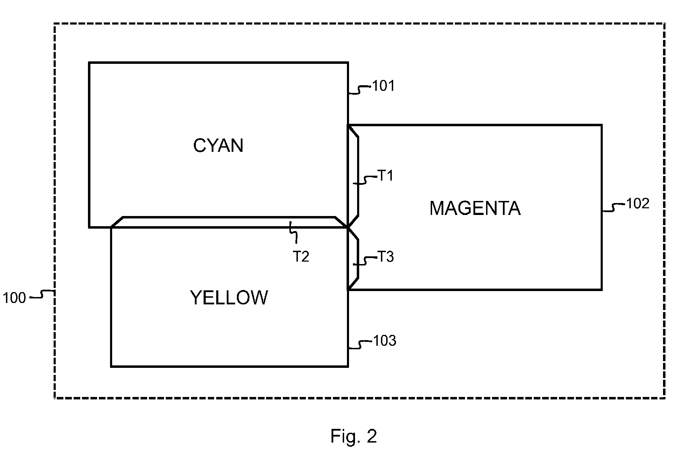

In a first step, a trapping determination process is executed on the polychromatic document image. The 'trapped' document image is shown in Fig. 2. For each of the three boundaries (104-106) a trap is created. Any misalignment of two bounding regions of different color, is compensated for a range corresponding with the trap width of e.g. 0.2 mm.

Trap T1 is determined at the boundary (104) of the cyan color region (101) and the magenta color region (102). The trap T1 corresponds to an overlapping zone of cyan into the magenta region. Hence, the trapping direction is determined based on the higher relative luminance of cyan with respect to magenta. As a result of this overlap, the trap T1 originating from the combination of cyan and magenta, is colored blue.

Trap T2 is determined at the boundary (105) of the cyan color region (101) and the yellow color region (103). The trap T2 corresponds to an overlapping zone of yellow into the cyan region. Hence, the trapping direction is determined based on the higher relative luminance of yellow with respect to cyan. As a result of this overlap, the trap T2 originating from the combination of cyan and yellow, is colored green.

Trap T3 is determined at the boundary (106) of the yellow color region (103) and the magenta color region (102). The trap T3 corresponds to an overlapping zone of yellow into the magenta region. Hence, the trapping direction is determined based on the higher relative luminance of yellow with respect to magenta. As a result of this overlap, the trap T3 originating from the combination of yellow and magenta, is colored red.

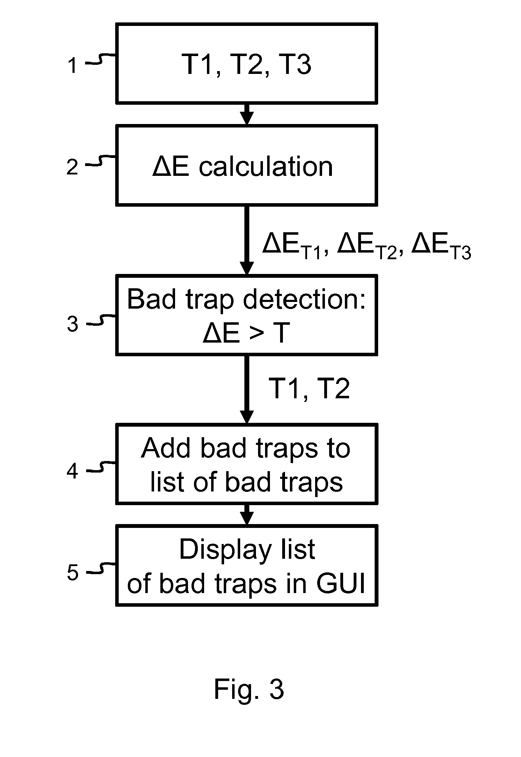

Fig. 3 schematically illustrates a workflow for determining bad traps, according to an embodiment of underlying invention. In a first step (1) traps T1, T2 and T3 are determined (See also Fig. 2).

In a subsequent step (2), a ΔE value is calculated for each trap. This ΔE value represents a perceptual color difference between the trap and the original color region upon which the trap is located.

In case of trap T1, the ΔE value is calculated based on the difference between the trap color, i.e. blue, and the color of the bounding region underlying trap T1, i.e. magenta. For trap T2, the ΔE value will be calculated based on the trap color green and the underlying region color, i.e. cyan. Analogously for trap T3, the ΔE value is based on colors red and magenta.

In this example, the formula whereby the ΔE value for each trap is calculated concerns the ΔE CIE76 formula. Herein, the color difference is calculated by means of CIE L*a*b* color space values. The ΔE CIE76 formula for a first and second color with respective color space values $(L_1^*, a_1^*, b_1^*)$ and $(L_2^*, a_2^*, b_2^*)$ is shown in the following equation:

$$\Delta E_{ab}^* = \sqrt{\left(L_2^* - L_1^*\right)^2 + \left(a_2^* - a_1^*\right)^2 + \left(b_2^* - b_1^*\right)^2}$$

To calculate the respective ΔE values for each trap, the CIE L*a*b* color values for the color regions and traps T1, T2 and T3 will be used. In the table below, the corresponding L*a*b* color values are listed for the color of the bounding regions (101-103), i.e. cyan, magenta and yellow.

|         | L* | a*  | b*  |
|---------|----|-----|-----|
| Cyan    | 62 | -74 | -50 |
| Magenta | 52 | 81  | -7  |
| Yellow  | 95 | -6  | 95  |

The color values for the traps T1, T2 and T3 are listed in the table below:

|  | L* | a* | b* |
|---|---|---|---|
| Blue (trap T1) | 25 | 25 | -55 |
| Green (trap T2) | 57 | -74 | 30 |
| Red (trap T3) | 52 | 74 | 54 |

Based on these color values, the $\Delta E$ values for traps T1, T2 and T3 amount to respectively 79, 86 and 61. Note that an alternative $\Delta E$ value calculation can be executed using $\Delta E$ CIEDE2000. Herein the so-called 'perceptual uniformity issue' is taken into account. The $\Delta E$ values then amount 40, 41 and 26 for respectively trap T1, T2 and T3. For a full description on $\Delta E$ CIEDE2000 or other existing $\Delta E$ formulas, reference is made to the known existing literature.

The following step (3) of the workflow of Fig. 3 corresponds to the determination of bad traps, based on the comparison of the calculated $\Delta E$ values for each trap with a threshold. For the example using the $\Delta E$ CIE76 formula, threshold T is predefined as 70. Therefore, traps T1 and T2 are marked as bad traps, as values 79 and 86 exceed threshold T. Analogously, threshold T could be predefined as 30 in case the $\Delta E$ CIEDE2000 would be used, also leading to bad traps T1 and T2.

Depending on the expected quality of printing, a user could decide for example to increase or decrease the threshold value T, leading to more or respectively less marked bad traps for the user or operator to take care of. Also, the setting of the threshold could be determined automatically, based on the content of or based on a quality setting for the document image (100).

Subsequently, in a fourth step (4) these bad traps T1 and T2 are added to a list of bad traps. Then, in the next step (5), the list is displayed in a graphical user interface (GUI).

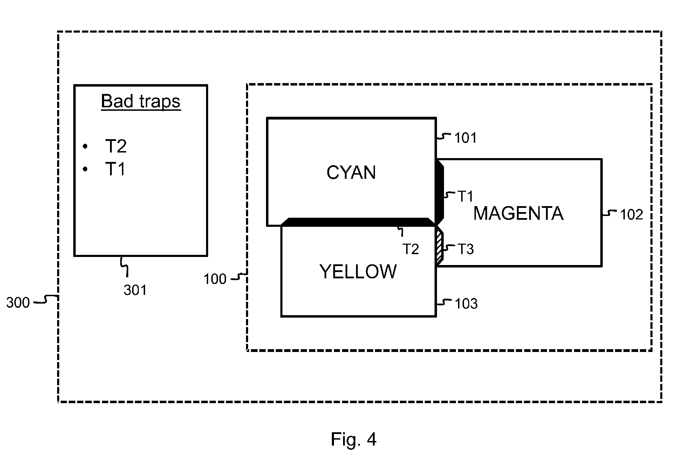

Fig. 4 schematically illustrates a possible graphical user interface or GUI for an operator. The GUI screen (300) displays the trapped document image (100) together with the corresponding list (301) of bad traps, i.e. T1 and T2. Optionally, the traps are ranked in the displayed list (301) depending on the calculated $\Delta E$ value.
With the use of the GUI, an operator can easily and quickly handle the most visually disturbing traps. Possibly, the operator could change trap aspects, such as the width, intensity, etc. by means of the GUI application. Also, the operator could e.g. even have the opportunity to remove a trap from the document image.

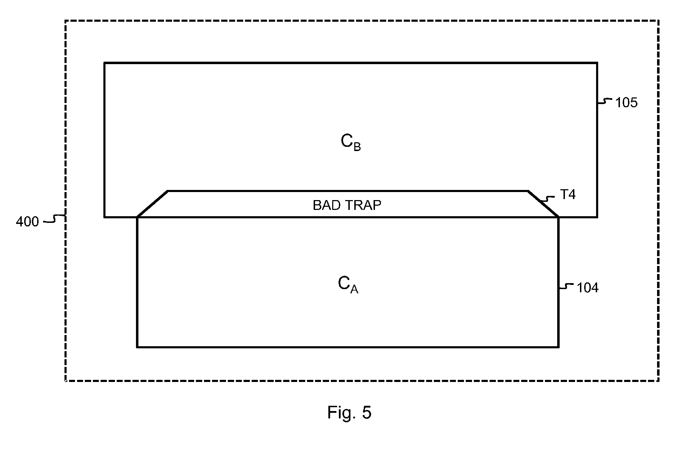

Fig. 5 schematically illustrates a determined bad trap T4 in document image (400). The bad trap T4 is determined at a boundary between a first bounding region (104) with color $C_A$ and a second bounding region (105) with color $C_B$. The bad trap T4 corresponds to an overlying or broadened zone for the bounding region (104) of color $C_A$ on top of the original or underlying region (105) with color $C_B$. Colors $C_A$ and $C_B$ can be derived from three basic color components and corresponding intensities. The following table shows in columns $C_A$ and $C_B$ a possible corresponding intensity distribution:

|  | $C_A$ | $C_B$ | $C_T$ | $C_T$' | | | Intensity decrease |
|---|---|---|---|---|---|---|---|
| Basic color 1 | 20% | 100% | 100% | **80%** | 100% | 100% | **20%** |
| Basic color 2 | 80% | 20% | 80% | 80% | **60%** | 80% | 25% |
| Basic color 3 | 20% | 40% | 40% | 40% | 40% | **20%** | 50% |

The combined color $C_T$ for the bad trap T4 is generally obtained by retaining per basic color the maximal intensity for the two bounding colors $C_A$ and $C_B$. Hence, the combined color for the bad trap concerns a combination of respectively 100%, 80% and 40% of basic colors 1, 2 and 3 (see table above).

Possibly, an operator could reduce the intensity for the bad trap T4, in order to decrease the value representing the perceptual color difference between the trap (T4) and the bounding region (105) underlying the trap (T4). The above table illustrates per basic color, a corresponding reduction of intensity for which the mentioned value equals the threshold value T. Hereby, the intensity for the other basic color components is retained. A minimal reduction of intensity (i.e. 20%) is obtained in case of reducing the intensity for basic color 1.

Hence, the intensity for the trap can be reduced by using an adapted trap color $C_T$', with decreased intensity for basic color 1. Hereby, the visual color transition for trap T4 will be improved.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof.

The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. It is to be understood that the terms so used are interchangeable under appropriate circumstances and embodiments of the invention are capable of operating according to the present invention in other sequences, or in orientations different from the one(s) described or illustrated above.

**Claims**

1. A computer-implemented method for evaluating a trap (T1,T2,T3) determined at a corresponding boundary (104-106) between two bounding regions (101-103) of different color in a document image (100) to avoid or reduce the effects of misregistration in a polychromatic print process, said method comprising the steps of:

   - calculating for said trap (T1,T2,T3) a value representing a perceptual color difference between said trap (T1,T2,T3) and a bounding region (101-103) corresponding to said trap (T1,T2,T3);
   - comparing said value with a threshold value (T); and
   - marking said trap (T1,T2,T3) as a bad trap (T1,T2) when said value exceeds said threshold value (T).

2. Method according to claim 1, wherein said calculated value represents a perceptual color difference between said trap (T1,T2,T3) and the bounding region (101-103) underlying said trap (T1,T2,T3).

3. Method according to any of claims 1 or 2, wherein said method further comprises:

   - adding said bad trap (T1,T2) to a list (301) of bad traps.

4. Method according to any of claims 1-3, wherein said method further comprises:

   - enabling an operator to remove said bad trap (T1,T2) from said document image (100).

5. Method according to any of claims 1-4, wherein said method further comprises:

   - enabling an operator to reduce intensity for said bad trap (T1,T2,T4) in said document image (100,400).

6. Method according to claim 5, wherein reducing intensity of a bad trap (T4) corresponds to a minimal intensity reduction for one or more basic colors of the trap color ($C_T$) such that said threshold value (T) equals said value representing said perceptual color difference between said trap (T4) and said bounding region (105) corresponding to said trap (T4).

7. Method according to claim 5 or 6, wherein reducing intensity of a bad trap (T4) corresponds to reducing intensity of one basic color of the trap color ($C_T$) such that said threshold value (T) equals said value representing said perceptual color difference between said trap (T4) and said bounding region (105) corresponding to said trap (T4).

8. Method according to claim 7, wherein said one basic color is determined based on a minimal intensity reduction.

9. Method according to any of claims 1-8, wherein said perceptual color difference corresponds to a $\Delta E$ value.

10. Method according to any of claims 1-9, wherein said value is calculated by means of a $\Delta E$ formula based on CIE L*a*b* color space values for said trap (T1,T2,T3) and said bounding region (101-103) corresponding to said trap (T1,T2,T3).

11. Method according to any of claims 1-10, wherein a prior step of said method concerns:

- determining one or more traps (T1,T2,T3) in a polychromatic document image (100).

12. Method according to claim 11, wherein determining one or more traps (T1,T2,T3) comprises the retrieval of one or more tagged traps within said document image (100).

13. Processor for carrying out the method according to any of claims 1-12.

14. A computer program product comprising computer-executable instructions for performing the method according to any of claims 1-12, when the program is run on a computer.

15. A computer readable storage medium comprising the computer program product according to claim 14.

Fig. 1

Fig. 2

Fig. 3

Fig. 4

400

$C_B$

105

BAD TRAP — T4

$C_A$

104

Fig. 5

Europäisches
Patentamt

European
Patent Office

Office européen
des brevets

# EUROPEAN SEARCH REPORT

Application Number

EP 15 15 2347

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 996 282 A2 (XEROX CORP [US]) 26 April 2000 (2000-04-26) * abstract; figure all * * paragraphs [0024], [0047] - [0050], [0052], [0055], [0057], [0058], [0060] * | 1-3,5-15 | INV. H04N1/58 |
| X,D | EP 0 618 718 A1 (MILES INC [US]) 5 October 1994 (1994-10-05) * abstract; figure all * * page 21, line 55 - page 56, line 20 * | 1,3,4, 11,13-15 | |

TECHNICAL FIELDS
SEARCHED      (IPC)

H04N

The present search report has been drawn up for all claims

| Place of search | Date of completion of the search | Examiner |
|---|---|---|
| The Hague | 20 July 2015 | Winne, Dominique |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 15 2347

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2015

| Patent document cited in search report | | Publication date | Patent family member(s) | | Publication date |
|---|---|---|---|---|---|
| EP 0996282 | A2 | 26-04-2000 | EP | 0996282 A2 | 26-04-2000 |
| | | | JP | 4234281 B2 | 04-03-2009 |
| | | | JP | 2000165693 A | 16-06-2000 |
| | | | US | 2003063301 A1 | 03-04-2003 |
| | | | US | 2003090689 A1 | 15-05-2003 |
| EP 0618718 | A1 | 05-10-1994 | DE | 69418928 D1 | 15-07-1999 |
| | | | DE | 69418928 T2 | 25-11-1999 |
| | | | EP | 0618718 A1 | 05-10-1994 |
| | | | JP | H07135574 A | 23-05-1995 |
| | | | US | 5668931 A | 16-09-1997 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5113249 A

- US 5668931 A